# EUROPÄISCHE PATENTANMELDUNG

(11) **EP 0 555 700 A1**
(43) Veröffentlichungstag der Anmeldung: **18.08.1993**
(21) Anmeldenummer: 93101295.9
(22) Anmeldetag: 28.01.1993
(51) Int. Cl.: H02P 1/44, H02K 17/08

(54) **Einphaseninduktionsmotor mit Anlaufeinrichtung**

(30) Priorität: 14.02.1992 DE 4204323; 09.05.1992 DE 4215263
(71) Anmelder: GRUNDFOS A/S, DK-8850 Bjerringbro (DK)
(72) Erfinder: Jensen, Niels Due, DK-8850 Bjerringbro (DK); Daugbjerg, Jorgen, DK-8860 Ulstrup (DK)
(74) Vertreter: Vollmann, Heiko, Dipl.-Ing.

(57) **Zusammenfassung**

Der Einphaseninduktionsmotor weist eine Anlaufeinrichtung auf, die während der Anlaufphase des Motors aktiviert wird und mindestens einen Teil der Motorwicklung (2) mit einer sich zeitlich ändernden Spannung beaufschlagt, deren während einer Schwingungsperiode gebildeter Mittelwert ungleich Null ist.

## Beschreibung

Die Erfindung betrifft einen Einphaseninduktionsmotor mit einer Anlaufeinrichtung.

Derartige Motoren werden heutzutage auf zahlreichen Gebieten eingesetzt, beispielsweise zum Antrieb von Heizungs- und Unterwasserpumpen, zum Antrieb Von Kompressoren und anderen Aggregaten. Sie werden mit Wechselstrom betrieben und sind im wesentlichen für kleine Leistungen vorgesehen. In einfachster Form sind Einphaseninduktionsmotoren weder selbstanlaufend noch drehrichtungsbestimmt. In der Praxis ist beides jedoch im allgemeinen erforderlich, weshalb eine Anlaufeinrichtung vorgesehen ist. Mit dieser wird nicht nur die Drehrichtung festgelegt, sondern auch ein Anlaufmoment erzeugt. In einfachster Form besteht diese Anlaufeinrichtung aus einer im Ständer vorgesehenen Hilfswicklung, zu der ein Kondensator in Reihe geschaltet ist. Diese Anlaufeinrichtung ist parallel zur Ständerwicklung geschaltet.

In verfeinerter Ausführung ist zumindest ein Teil der eigentlichen Anlaufeinrichtung nach Erreichen einer vorbestimmten Drehzahl meist über einen Fliehkraftschalter abschaltbar. Beim Abschalten wird in der Regel die an der Hilfswicklung anliegende Kondensatorkapazität verringert. Diese Technik ist bekannt, es wird hierzu beispielhaft auf SIHI-HALBERG, Grundlagen für die Planung von Kreiselpumpenanlagen, 1978, Seiten 186 und 187 verwiesen.

Bekannte Anlaufeinrichtungen arbeiten unabhängig davon, ob sie bei Erreichen der Nenndrehzahl ganz oder teilweise abgeschaltet werden oder auch nicht, so, daß sich beim Anfahren des Motors ein mit dem Rotor umlaufendes etwa gleichförmiges Anfahrdrehmoment einstellt. Die Kurven des relativen magnetischen Flusses von Stator und Rotor stellen sich als im wesentlichen symmetrisch um den Nullpunkt angeordnete Ellipsen dar. Baulich sind derartige Anlaufeinrichtungen nach dem Stand der Technik neben der ohnehin erforderlichen Hilfswicklung durch Zuschaltung von Kondensatoren realisierbar. Kondensatoren sind vergleichsweise teure Bauelemente und nehmen mit steigender Kapazität zunehmenden Raum ein.

Hiervon ausgehend liegt der Erfindung die Aufgabe zugrunde, eine alternative Anlaufeinrichtung zu schaffen, die mit anderen elektronischen Bauelementen günstiger aufgebaut werden kann.

Diese Aufgabe wird gemäß der Erfindung dadurch gelöst, daß die Anlaufeinrichtung während der Anlaufphase des Motors mindestens einen Teil der Motorwicklung mit einer sich zeitlich ändernden Spannung beaufschlagt, deren während einer Schwingungsperiode (der Versorgungsspannung) gebildeter Mittelwert ungleich Null ist. Es versteht sich, daß gemäß der Erfindung der Motor während der Anlaufphase mit einer Spannung angesteuert wird, deren zeitlicher Mittelwert bewußt ungleich Null gesteuert wird. Die durch Ungleichmäßigkeiten innerhalb des Versorgungsneztes üblicherweise vorhandenen Schwankungen, die bei genauer Betrachtung ebenfalls zu einem Spannungsmittelwert ungleich Null führen, sind vernachlässigbar und reichen für diese gezielte Motorsteuerung nicht aus.

Die Erfindung ist sowohl bei Anlaufeinrichtungen einsetzbar, die ständig mitlaufen als auch bei solchen, die nach Erreichen einer vorbestimmten Drehzahl ganz oder teilweise abgeschaltet werden. Dadurch, daß der Mittelwert der an mindestens einem Teil der Motorwicklung anliegenden sich zeitlich ändernden Spannung ungleich Null ist, verschieben sich die Kurven des relativen Flusses im Stator und im Rotor vom Nullpunkt weg, wobei das Maß der Verschiebung eine Funktion des Mittelwerts der vorerwähnten Spannung ist. Daraus resultiert, daß das Anlaufmoment nicht mehr gleichförmig ist und kurzzeitig auch umgekehrt werden kann. Der Betrag des Maximalmomentes wird hierdurch auf das zwei- bis dreifache des üblichen Wertes erhöht. Das Betreiben wenigstens eines Teiles der Motorwicklung mit einer Spannung, deren Mittelwert ungleich Null ist, hat hinsichtlich des Startvorganges dennoch die gleiche Wirkung wie die einer großen mit der Hilfswicklung in Reihe geschalteten Kapazität. Im übrigen kann durch Wahl, Anordnung und Dimensionierung der elektronischen Bauelemente das Anlaufmoment so gewählt werden, daß eine Richtungsumkehr des Momentes gerade nicht erfolgt, sondern das Moment allenfalls - während eines Bruchteils einer Schwingungsperiode - auf den Wert Null zurückfällt.

Der Vorteil der erfindungsgemäßen Lösung liegt darin, daß die Anlaufeinrichtung in einfachster Form neben einer Hilfswicklung lediglich noch ein Gleichrichterelement benötigt, was in Form einer Diode billig und raumsparend zur Verfügung steht. Es bieten sich zahlreiche Möglichkeiten an, dieses Gleichrichterelement zu schalten, so kann es beispielsweise parallel oder in Reihe zur Hilfswicklung geschaltet sein.

Die erfindungsgemäße Anlaufeinrichtung arbeitet unabhängig davon, ob die Hilfswicklung während des Betriebes des Motors in Verbindung mit einem Betriebskondensator zur Steigerung des Kippmoments und der Nennleistung aufgeschaltet bleibt oder auch nicht.

Die Erfindung ist nachfolgend anhand von in den Zeichnungen dargestellten Ausführungsbeispielen näher erläutert. Es zeigen
- Figuren 1 und 2: beispielhaft zwei Schaltungsanordnungen mit der erfindungsgemäßen Anlaufeinrichtung,
- Figur 3: ein Diagramm, das den relativen Statorfluß während einer Rotorumdrehung bei drei unterschiedlichen Spannungsmittelwerten darstellt,
- Figur 4: ein relatives Startorflußdiagramm, dessen Kurve den Nullpunkt gerade noch einschließt und
- Figur 5: den zeitlichen Momentenverlauf der sich bei einem Statorfluß nach Figur 4 ergibt.

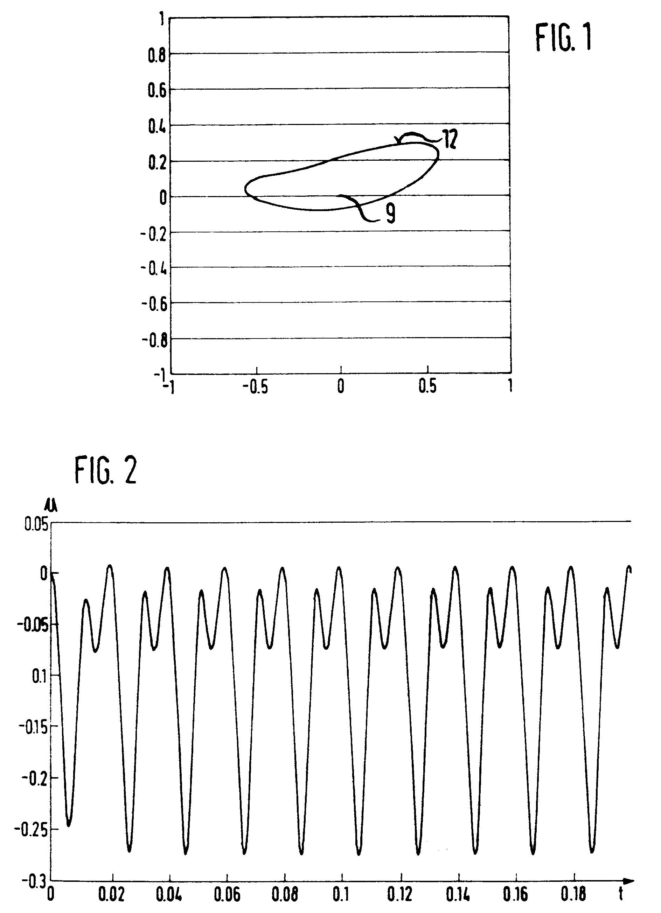

In den Figuren 1 und 2 ist die Hauptstatorwicklung des Einphaseninduktionsmotors jeweils mit 1 gekennzeichnet. Die parallel dazu geschaltete Hilfswicklung - häufig auch als Anlaufwicklung bezeichnet -ist mit 2 gekennzeichnet. Mit 2a ist eine Hilfswicklung bezeichnet, der eine induktiv gekoppelte weitere Hilfswicklung 2b zugeordnet ist. Hier besteht die Hilfswicklung 2 also aus zwei parallelen Hilfswicklungen 2a und 2b.

Der anhand von Figur 1 dargestellte Einphaseninduktionsmotor weist in an sich bekannter Weise eine Hauptwicklung 1 auf, zu der parallel eine Hilfswicklung 2 in Serie mit einem Betriebskondensator 3 liegt. Die Wicklung 2 und der Kondensator 3 bleiben während des gesamten Motorbetriebes aufgeschaltet und sorgen im Betrieb für eine erhöhte Nennleistung des Motors. Zum Anfahren des Motors wird parallel zum Betriebskondensator 3 eine Diode 4 geschaltet, die in Reihe mit einem Fliehkraftschalter 5 liegt. Beim Anfahren des Motors bilden die Diode 4 und der Fliehkraftschalter 5 neben der Anlaufwicklung 2 die eigentliche Anlaufeinrichtung. Hat der Motor eine vorbestimmte Drehzahl, beispielsweise zwei Drittel der Nenndrehzahl erreicht, öffnet der Fliehkraftschalter 5 in die in Figur 1 dargestellte Schaltstellung, wonach die Anlaufeinrichtung deaktiviert ist.

Der Kondensator 3 und die Hilfswicklung 2 sind zwar in der Praxis zum Anlaufen des Motors erforderlich, damit nämlich die Drehrichtung bestimmt ist, gehören jedoch nicht zur eigentlichen Anlaufeinrichtung. Die Diode 4 ersetzt den beim Stand der Technik üblicherweise zum Zwecke des Anlaufens zugeschalteten weiteren Kondensator. Zu der Diode 4 kann gegebenenfalls noch ein (nicht dargestellter) Widerstand in Reihe oder andere elektronische Bauelemente geschaltet werden, um die relative Flußkurve bzw. den Momentenverlauf in der gewünschten Weise einzustellen.

Bei der anhand von Figur 2 dargestellten Schaltung liegt die Hilfswicklung 2a mit dem Betriebskondensator 3 in Reihe und parallel zur Statorhauptwicklung 1. Zum Anlaufen des Motors wird ein Schalter 6 geschlossen, der dann parallel zur Statorhauptwicklung 1 einen Widerstand 7, eine weitere Hilfswicklung 2b sowie eine Diode 4 hintereinander in Reihe schaltet. Die weitere Hilfswicklung 2b ist induktiv mit der ersten Hilfswicklung 2a gekoppelt. Der Schalter 6 ist über ein Bimetallglied gesteuert, d.h., er schaltet nach einer gewissen Zeit durch seine durch den Stromfluß erzeugte Erwärmung. Die innerhalb des Motors entstehende Wärme sorgt dann dafür, daß der Schalter 6 nach dem Schaltvorgang nicht wieder in seinen ursprünglichen Zustand zurückfällt, sondern erst dann, wenn der Motor abgekühlt ist und wieder angefahren werden soll. Anstelle des Schalters 6 kann auch der Schalter 5 oder ein Zeitschalter eingesetzt werden.

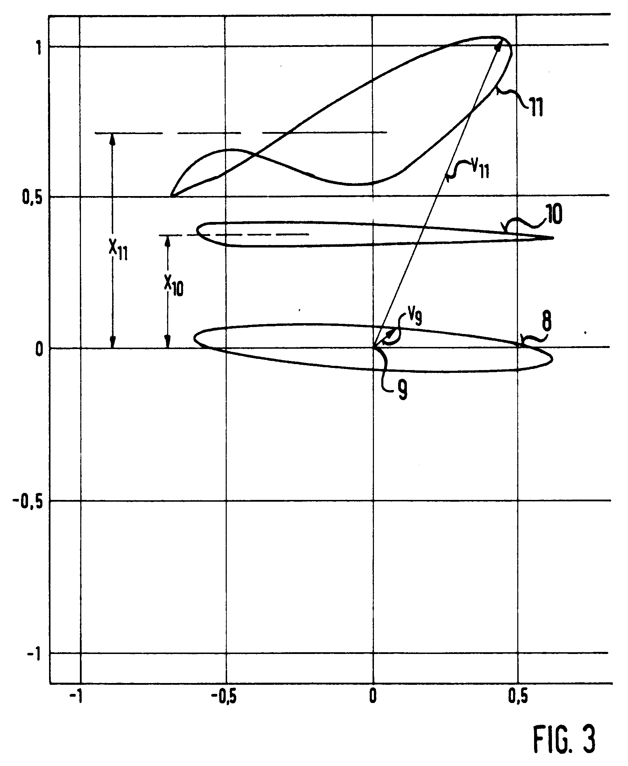

Beim normalen Motorbetrieb, wie er aus dem Stand der Technik bekannt ist, wird der Motor auch in der Anlaufphase mit einer Wechselspannung beaufschlagt, deren Frequenz gegebenenfalls durch einen Frequenzumformer variiert werden kann. Der Mittelwert der Versorgungsspannung während einer Schwingungsperiode ist jedoch stets Null. Dann ergibt sich ein relativer magnetischer Fluß im Stator des Motors, wie er anhand der Kurve 8 in Figur 3 dargestellt ist. Solche Kurven sind typischerweise symmetrisch um den Nullpunkt 9 angordnete Ellipsen.

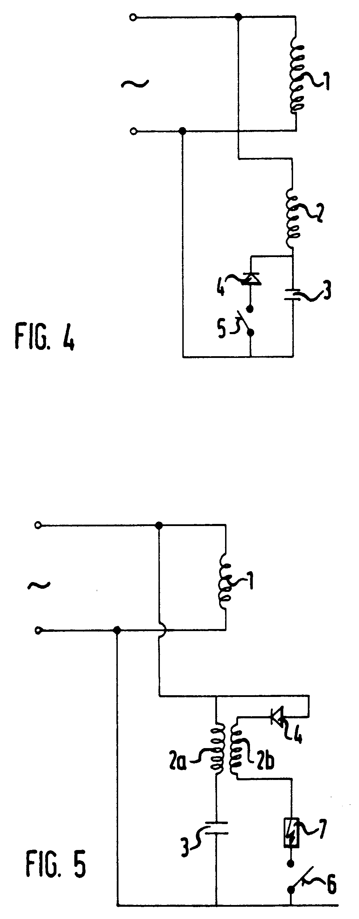

Zu jeder Startorflußkurve gehört eine Rotorflußkurve, die den relative magnetischen Fluß des Rotors während einer Motorumdrehung darstellt. Solche Rotorflußkurven liegen typischerweise innerhalb der zugehörigen Statorflußkurve und sind aus Übersichtsgründen in den Figuren 3 und 4 nicht dargestellt. Sie verhalten sich im übrigen ähnlich wie die Statorflußkurven. Wird die an einem Teil einer oder mehrerer Wicklungen anliegende Spannung auf einen zeitlichen Mittelwert eingestellt, der ungleich Null ist, so verändert sich zum einen die Kurvenform des relativen magnetischen Flusses und zum anderen ihre Lage zum Nullpunkt 9. In Figur 3 sind beispielhaft zwei weitere Kurven 10 und 11 dargestellt, die den relativen magnetischen Statorfluß während einer Motorumdrehung zeigen, wenn der zeitliche Mittelwert der anliegenden Spannung ungleich Null ist. Während die Kurve 10 im wesentlichen um einen Betrag X₁₀ aus dem Koordinatennullpunkt 9 verschoben ist, ist die Kurve 11 auch noch deutlich in ihrer Form geändert. Sie ist um den Betrag X₁₁ zum Nullpunkt 9 verschoben. Dieser Abstand X, mit dem sich die Kurven 10 und 11 von der Ursprungskurve 8, insbesondere vom Nullpunkt 9 entfernt haben, ist eine Funktion des zeitlichen Mittelwertes der der Hilfswicklung 2 aufgeschalteten Spannung Uₘ. Das heißt, je größer dieser Abstand X ist, desto größer ist auch der zeitliche Mittelwert dieser Spannung.

Der augenblickliche magnetische Fluß innerhalb des Stators und des Rotors ist jeweils durch einen vom Nullpunkt 9 ausgehenden Vektor bestimmt, dessen Spitze auf der Statorflußkurve bzw. der (nicht dargestellten) Rotorflußkurve liegt. Zwischen diesen beiden Vektoren liegt ein sich ändernder Winkel α. Das zwischen Rotor und Stator entstehende Drehmoment ist eine Funktion des Kreuzproduktes dieser beiden Vektoren bzw. der durch die Länge der Vektoren gegebenen Beträge und des von Ihnen aufgespannten Winkels α. Hieraus wird deutlich, daß mit wachsendem Abstand X auch das Maximalmoment des Motors wächst. Es sind hierzu beispielhaft zwei Vektoren V₉ und V₁₁ eingezeichnet.

Während bei den Statorflußkurven nach Ziffern 10 und 11 in Figur 3 das Moment nicht nur seinen Betrag, sondern auch seine Richtung ändert, ist die Anlaufeinrichtung, deren Wirkung anhand der Figuren 4 und 5 dargestellt ist, so abgestimmt, daß die Statorflußkurve 12 gerade noch den Nullpunkt 9 einschließt, wodurch sichergestellt ist, daß der zeitliche Momentenverlauf des Motors stets größer oder kleiner (je nach Drehrichtung) Null ist. Ein solcher Momentenverlauf ist in Figur 5 dargestellt. Deutlich sind die hohen Momentspitzen zu erkennen, die nicht nur dafür sorgen, daß zumindest kurzzeitig ein besonders hohes Drehmoment zum Anfahren zur Verfügung steht, was beispielsweise bei Festsitzen des Rotors von Vorteil ist, sondern dieses Moment auch noch pulsiert, so daß ein gewisser Rütteleffekt erreicht wird, der das Anfahren auch unter ungünstigen Umständen ermöglicht. Wenn dann nach Erreichen einer vorbestimmten Drehzahl oder nach einer vorbestimmten Zeit die Anlaufeinrichtung deaktiviert wird, dann ergibt sich eine Statorflußkurve, die symmetrisch zum Nullpunkt 9 angeordnet ist, wie dies üblich ist.

| Bezugszeichenliste | |
|---|---|
| 1 | Startorhauptwicklung |
| 2 | Hilfswicklung |
| 2a | Hilfswicklung |
| 2b | weitere Hilfswicklung |
| 3 | Betriebskondensator |
| 4 | Diode |
| 5 | Fliehkraftschalter |
| 6 | Thermoschalter |
| 7 | Widerstand |
| 8 | Kurve |
| 9 | Nullpunkt |
| 10 | Kurve |
| 11 | Kurve |
| 12 | Kurve |
| X₁₀ | Betrag der Verschiebung |
| X₁₁ | Betrag der Verschiebung |
| V₉ | Vektor |
| V₁₁ | Vektor |

## Patentansprüche

1. Einphaseninduktionsmotor mit einer Anlaufeinrichtung, dadurch gekennzeichnet, daß die Anlaufeinrichtung (4,5;4,6,7,2b) während der Anlaufphase des Motors mindestens einen Teil der Motorwicklung (2) mit einer sich zeitlich ändernden Spannung beaufschlagt, deren während einer Schwingungsperiode gebildeter Mittelwert ungleich Null ist.

2. Motor nach Anspruch 1, dadurch gekennzeichnet, daß die Anlaufeinrichtung mindestens ein Gleichrichterelement (4) aufweist, das während der Anlaufphase mindestens einem Teil der Motorwicklung (2) aufgeschaltet ist.

3. Motor nach Anspruch 1 oder 2 mit einer Hilfswicklung im Ständer des Motors, dadurch gekennzeichnet, daß das Gleichrichterelement (4) während der Anlaufphase parallel oder in Reihe zur Hilfswicklung (2) oder einem Teil der Hilfswicklung (2b) geschaltet ist.

4. Motor nach einem der vorhergehnden Ansprüche, dadurch gekennzeichnet, daß das Gleichrichterelemt nach Erreichen einer vorbestimmten Drehzahl oder nach einer bestimmten Zeit deaktiviert wird.

5. Motor nach einem der vorhergehnden Ansprüche, dadurch gekennzeichnet, daß als Gleichrichterelement eine Diode (4) eingesetzt ist.
